(19) Europäisches Patentamt
European Patent Office
Office européen des brevets

(11) **EP 0 635 922 B1**

(12) **EUROPÄISCHE PATENTSCHRIFT**

(45) Veröffentlichungstag und Bekanntmachung des Hinweises auf die Patenterteilung:
05.03.1997 Patentblatt 1997/10

(51) Int Cl.⁶: **H02H 3/33**, H01F 38/40

(21) Anmeldenummer: **94109026.8**

(22) Anmeldetag: **13.06.1994**

(54) **Fehlerstromerfassungseinrichtung mit hoher Empfindlichkeit**

Fault current acquiring device having high sensitivity

Dispositif d'acquisition de courant de défaut à haute sensibilité

(84) Benannte Vertragsstaaten:
AT BE CH DE DK ES FR GB IT LI NL SE

(30) Priorität: **25.06.1993 DE 4321232**

(43) Veröffentlichungstag der Anmeldung:
**25.01.1995 Patentblatt 1995/04**

(73) Patentinhaber: **SIEMENS AKTIENGESELLSCHAFT**
**80333 München (DE)**

(72) Erfinder: **Pohl, Fritz**
**D-91334 Hemhofen (DE)**

(56) Entgegenhaltungen:
EP-A- 0 002 225          EP-A- 0 392 204
DE-A- 1 538 122          DE-B- 1 056 735
GB-A- 2 102 212          US-A- 4 021 729
US-A- 4 280 162          US-A- 5 110 378

## Beschreibung

Die Erfindung bezieht sich auf eine Fehlerstromerfassungseinrichtung für Allstrom, bestehend aus einem Summenstromwandler mit einer zugeordneten Feldspule, wobei die Achsen des Summenstromwandlers und der Feldspule in etwa kolinear verlaufen, wobei die Feldspule die Form einer flachen Ringspule hat.

Insbesondere in Niederspannungsnetzen können durch defekte elektrische Geräte oder Leitungen oder durch das Berühren spannungsführender Teile durch Personen gefährliche Fehlerströme auftreten. Die möglichen zeitlichen Verläufe derartiger Fehlerströme umfassen dabei glatten Gleichfehlerstrom, Wechsel- und Pulsfehlerströme, phasenangeschnittene Wechselfehlerströme und Gleichstrom überlagerte Wechselfehlerströme. Vom Stand der Technik sind unterschiedlichste Schaltungen bekannt, die jeweils für spezifische Anwendungsfälle ausgelegt sind.

Die Erfassung pulsierender Fehlerströme erfolgt häufig nach dem Transformatorprinzip mit Hilfe von Summenstromwandlern, in denen eine der zeitlichen Stromänderung proportionale Spannung induziert wird, die bei Überschreiten eines vorgegebenen Wertes eine Auslöseschaltung aktiviert.

Die Erfassung von Gleichfehlerströmen erfolgt üblicherweise mit Differenzstromschutzschaltungen, bei welchen die fehlerstromabhängige Magnetisierung des Summenstromwandlers zu einer annähernd fehlerproportionalen Meßspannung verarbeitet wird. Dazu wird an einem bzw. an mehreren Summenstromwandlern mittels einer Hilfswicklung eine Wechselmagnetisierung angelegt. Beispiele hierfür sind aus der DE-A-25 55 255 und der EP-OS 0 007 405 bekannt.

Speziell für Differenzstromschutzschaltungen sind insbesondere Transduktorschaltungen bekanntgeworden (Hartel/ Dietz, "Transduktorschaltungen", Springer-Verlag 1966), bei welchen der Summenstromwandler als veränderliche Induktivität die elektrische Leistung eines Generatorkreises steuert. Zum Beispiel wird die Induktivität des Summenstromwandlers bei hohen Gleichfehlerströmen klein, was durch die Abnahme der Permeabilität des Wandlerwerkstoffes mit zunehmender Magnetisierung verursacht wird, wodurch die abgegebene elektrische Leistung des Generators zunimmt und die elektrische Spannung an einer Meßimpedanz im Generatorkreis, dem Sekundärkreis des Wandlers, ansteigt. Derartige Differenzstromschutzschaltungen können mit hochpermeablen Ringkernen als Summenstromwandler, insbesondere mit z-förmiger Magnetisierungskennlinie, bei nicht zu großem Ringumfang Fehlerströme > 10 mA mit einer Primärwindung erfassen. Beispiele hierfür sind aus der DE-OS 34 29 381, DE-OS 37 23 568 und der DE-OS 39 29 783 bekannt.

Weiterhin ist aus der EP-A-0 002 225 eine Fehlerstromerfassungseinrichtung für Wechsel- und Gleichfehlerströme bekannt, die einen Summenstromwandler aus einem hohlen, torusförmigen Ringkern aus magnetischem Material, welcher eine im Innern verlaufende ringförmige Hilfsstromschleife umschließt, enthält. Die Empfindlichkeit dieser Anordnung ist für die Praxis noch nicht ausreichend.

Bei Differenzstromschutzschaltungen für Leistungsschalter mit Nennströmen von 100 A bis zu mehreren 100 A wird die erforderliche Abmessung des Summenstromwandlers jedoch so groß, daß kleine Fehlerströme von beispielsweise 30 mA nicht mehr zuverlässig gemessen werden können. Die Größenordnung von 30 mA stellt aber für den Personenschutz eine kritische Grenze dar.

Aufgabe der Erfindung ist es daher, eine Fehlerstromerfassungseinrichtung zu schaffen, die auch bei größeren Nennströmen noch kleine Fehlerströme jeglicher Art, d.h. Wechsel- und Gleichfehlerströme, insbesondere auch unter 30 mA, erfassen kann.

Die Aufgabe ist erfindungsgemäß dadurch gelöst, daß der Summenstromwandler wenigstens einen Ringbandkern enthält, wobei die Symmetriezentren vom Ringbandkern und Feldspule auf den in etwa kolinearen Achsen gegeneinander versetzt sind, und daß zumindest der Ringbandkern aus einem hochpermeablen Magnetwerkstoff mit flacher Magnetisierungskennlinie besteht, wodurch das Magnetfeld der Ringspule eine in Bandlängsrichtung wirkende Induktion im Rangbandkern aufbaut, ohne daß eine erregende magnetische Feldstärke in Bandlängsrichtung auftritt.

Vorzugsweise stehen die Ringebenen von Ringbandkern und flacher Ringspule in engem Kontakt miteinander.

Durch die Erfindung werden unerwartet gute Ergebnisse erreicht. Im allgemeinen sinkt die Fehlerstromempfindlichkeit von Summenstromwandlern mit größerem mittlerem Kreisumfang, da die mittlere magnetische Feldstärke

$$(1) \qquad H = I/2\,r,$$

wobei I den Summenstrom darstellt, mit I/r abnimmt. Überraschenderweise erhält man bei einer Anordnung gemäß der Erfindung mit einem Wandler von 10 mm Gehäuseinnendurchmesser eine Auslöseempfindlichkeit von etwa 1 mA Gleichfehlerstrom. Damit kann bei großen Wandlern von 50 bis 100 mm Innendurchmesser für Nennstromanwendungen $I_N$ > 100 A eine Fehlerstromempfindlichkeit von $I_n$ = 10 mA unschwer erreicht werden.

Zumindest der Ringbandkern besteht aus einem hochpermeablen Magnetwerkstoff mit flacher Magnetisierungskennlinie. Dafür können ein amorphes Metall oder entsprechende Legierungen verwendet werden. Vorzugsweise sind Ringbandkern und Feldspule zumindest teilweise in ferritischem Material eingebettet.

Aus der GB-A-21 02 212 ist zwar bereits die Verwendung von Ringbandkernen für Fehlerstromerfassungseinrichtungen bekannt. Die dortige Anordnung ist allerdings nur für Wechselfehlerströme geeignet, d.h. glatte Gleichfehlerströme werden mit dieser Einrichtung nicht erfaßt. Außerdem ist die Empfindlichkeit um fast zwei Größenordnungen schlechter als bei der Erfindung.

Weitere Einzelheiten und Vorteile der Erfindung ergeben sich aus der nachfolgenden Figurenbeschreibung von Ausführungsbeispielen anhand der Zeichnung in Verbindung mit den Unteransprüchen. Es zeigen

FIG. 1    eine Prinzipdarstellung einer erfindungsgemäßen Anordnung,

FIG. 2    eine Ansicht in Richtung der kolinearen Achse zur Verdeutlichung des Magnetfeldes,

FIG. 3    die Darstellung von Magnetisierungsvektoren und Domänenanordnung bei Ringbandkernen mit flacher Magnetisierungskennlinie,

FIG. 4    einen vorteilhaft zu verwendenden Wandler-Spulenaufbau mit etwa 1 mA Fehlerstromempfindlichkeit,

FIG. 5    mit der Anordnung gemäß FIG. 4 gemessene Werte und

FIG. 6 und 7    zwei zu FIG. 3 alternative Ausführungsbeispiele.

Vom Stand der Technik bekannte Differenzstromschutzschaltungen haben üblicherweise einen Summenstromwandler, in dem eine Hilfs-Wechselmagnetisierung erzeugt wird. Beispielsweise wird die Wechselmagnetisierung im Wandler mit einer Wicklung der Windungszahl n, die den Wandlerquerschnitt umschließt und die von einem höherfrequenten Hilfswechselstrom durchflossen wird, erzeugt. Im Fehlerstromfall überlagern sich im Wandler mit mittlerem Eisenweg $l_E = 2 \pi r$ mit r als mittlerem Wandlerradius die magnetischen Feldstärken des Fehlerstromes

$$(2) \qquad H_1 = i_F/l_E$$

und des Hilfswechselstromes

$$(3) \qquad H_2 = n.i_H/l_E$$

zur resultierenden Feldstärke

$$(4) \qquad H = l/l_E \, (i_F+n.i_H).$$

Als Folge entstehen im Wandler Induktionsänderungen, die sich mit und ohne Fehlerstrom charakteristisch voneinander unterscheiden und als unterschiedliche, in eine Meßwicklung induzierte Spannungen ausgewertet werden können.

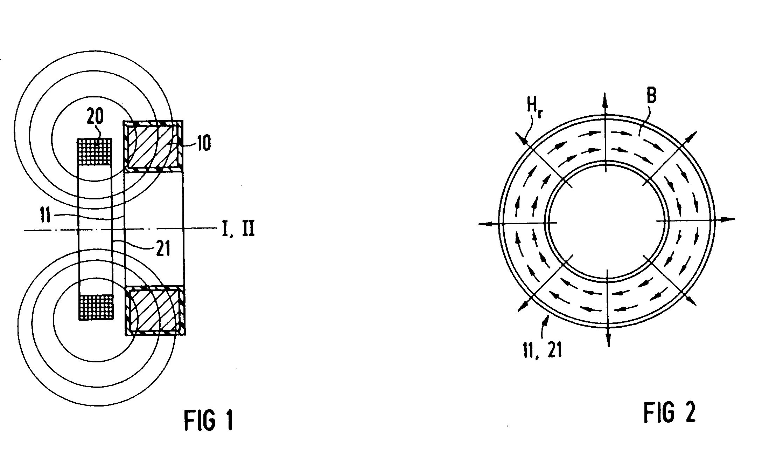

Bei der erfindungsgemäßen Anordnung in FIG. 1 ist ein in einem Gehäuse angeordneter Ringbandkern mit 10 bezeichnet, dem eine ringförmige Feldspule 20 benachbart ist. Vorteilhafterweise sind beide mit ihren Ringflächen 11 bzw. 21 in engem Kontakt nebeneinander angeordnet und haben kolineare Achsen I,II. Beispielsweise kann die Feldspule 20 eine Ringspule mit 12 mm Innendurchmesser, 20 mm Außendurchmesser, 3 mm Breite und der Windungszahl n = 100 sein, welche mit einem Hilfswechselstrom $\hat{i}_H = 70$ mA und einer Frequenz $\gamma = 15$ kHz betrieben wird. Aufgrund der kolinearen Anordnung durchsetzt das Magnetfeld der Feldspule 20 den Ringbandkern 10 daher mit Axial- und Radialkomponenten, wie es im einzelnen aus FIG. 1 und FIG. 2 ersichtlich ist. Bei dieser Anordnung wird die Wechselmagnetisierung im Ringbandkern 10 auf indirektem Weg erzeugt, ohne daß eine magnetische Feldstärke $H_2$ im einen Wandler bildenden Ringbandkern 10 auftritt. In diesem Fall ist also $H_2$ gleich Null.

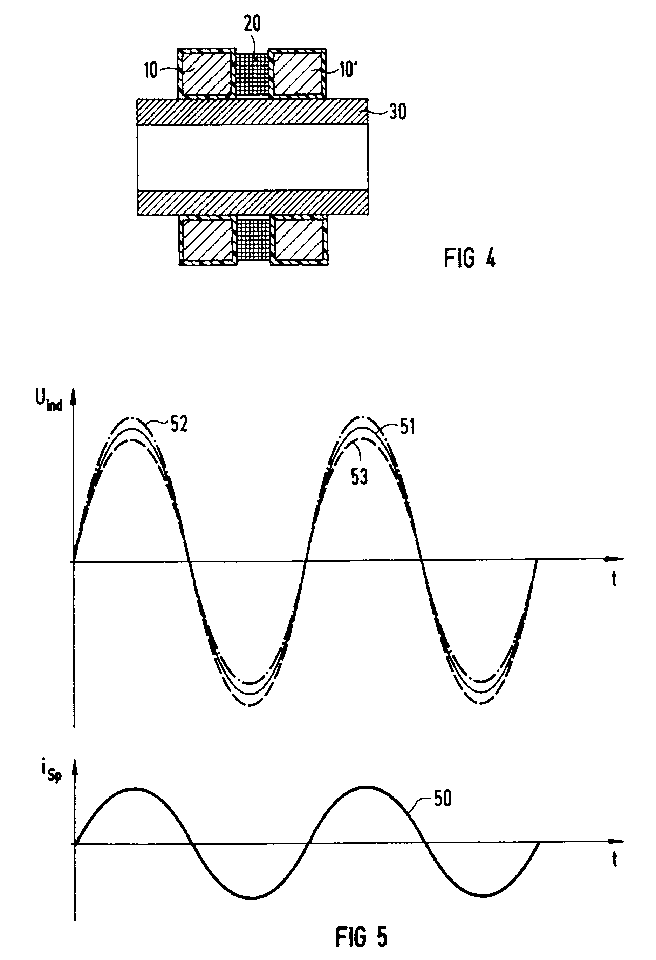

Bei einer Anordnung gemäß FIG. 4 aus zwei Ringbandkernen 10 und 10' sowie einer dazwischenliegenden Feldspule 20 wurde eine überraschend hohe Auslöseempfindlichkeit von bereits etwa 1 mA Gleichfehlerstrom gefunden, sofern für den Aufbau der Ringbandkerne 10, 10' ausschließlich hochpermeable Magnetwerkstoffe mit flacher Magnetisierungskennlinie verwendet wurden.

Ringbandkerne mit flacher Magnetisierungskennlinie sind bekannt. Sie sind aus einem Band gewickelt und werden während des Herstellungsverfahrens bei vorgegebener Temperaturbehandlung einem axialen, äußeren Magnetfeld ausgesetzt. Dabei stellt sich am Band, beispielsweise mit einer Dicke von 25 μm, eine Vorzugsmagnetisierung ein, indem Magnetisierungsvektoren in der Bandebene senkrecht zur Bandlängsrichtung abwechselnd entgegengesetzt zueinander verlaufen und mit entsprechenden Randmagnetisierungsvektoren kleine geschlossene magnetische Kreise bilden.

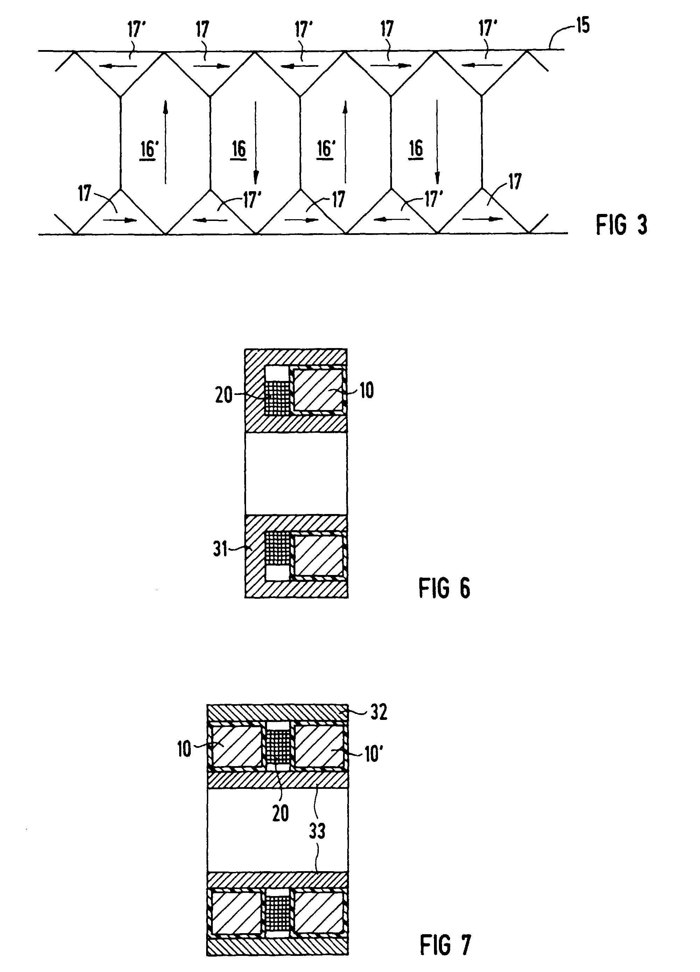

Letzteres wird anhand FIG. 3 verdeutlicht. Ein zur Wicklung eines Ringbandkerns 10 gemäß FIG. 1 geeignetes Band 15 hat eine Domänenanordnung, bei der benachbarte magnetische Domänen 16, 16' mit entgegengesetzter Magnetisierung quer zur Bandlängsrichtung jeweils durch 180°-Wände getrennt sind und zum Bandrand Abschlußdomänen 17, 17' mit 90°-Wänden vorhanden sind.

Geeignete Materialien zur Realisierung von Ringbandkernen sind hochpermeable Magnetwerkstoffe: Ein solcher Magnetwerkstoff kann beispielsweise aus amorphen Kobalt(Co)-Basislegierungen mit geringer Magnetostriktion bestehen, die üblicherweise hohe Permeabilität haben. Auch Magnetwerkstoffe aus nanokristallinen Eisen(Fe)-Basislegierungen mit geringer Magnetostriktion, die ebenfalls eine hohe Permeabilität haben, sind möglich. Schließlich wären auch Magnetwerkstoffe aus hochpermeablen Nickel(Ni)-Legierungen verwendbar. Ein solcher Werkstoff ist beispielsweise unter der Spezifikation E1 (72 - 83 % Ni) nach IEC 404-1 bekannt.

Wesentlich bei derartigen Werkstoffen ist für die bestimmungsgemäße Anwendung, daß durch Einstellen einer flachen Magnetisierungskennlinie nur ein geringes remanentes Feld in Bandlängsrichtung vorhanden ist, das praktisch keine Auswirkung auf die Messung des Fehlerstromsignals hat. Dabei ist für die remanente Induktion $B_r$ und die Sättigungsinduktion $B_s$ des Magnetwerkstoffes die Beziehung $B_r/B_s < 0.2$, insbesondere $B_r/B_s < 0.1$, erfüllt.

Messungen an Ringbandkernen mit flacher Magnetisierungskenplinie haben ergeben, daß unter dem Einfluß eines äußeren Magnetfeldes, welches senkrecht zur Bandebene steht, sich in definierter Weise eine magnetische Induktion in Bandlängsrichtung aufbaut. Diese Induktion ist phasengleich zum äußeren Magnetfeld und kehrt also ihre Vorzeichen mit dem Vorzeichen der Radialfeldkomponente der Feldspule 20 um.

Die gezeigte Vorzugsmagnetisierung im Band 15 liefert keinen meßbaren Remanenzeinfluß bei der erfindungsgemäßen Anordnung zur Fehlerstromerfassung. Dadurch ist, solange kein Strom durch den Wandler fließt und daher die magnetische Feldstärke im Wandler Null ist, die von der Feldspule 20 im Ringbandkern 10 erzeugte Wechselinduktion in Bandlängsrichtung symmetrisch zur Nullinie.

Fließt nun ein Gleich- oder Wechselfehlerstrom von beispielsweise 1 mA Amplitude durch den Ringbandkern 10 gemäß FIG. 4, so wird die von dem höherfrequenten äußeren magnetischen Wechselfeld erzeugte phasengleiche Wechselinduktion in Bandlängsrichtung so verzerrt, daß in einer Halbperiode die Induktionsamplitude ansteigt und in der folgenden Halbperiode die Induktionsamplitude sinkt. Letzteres ist beispielhaft aus den Kurven gemäß FIG. 5 zu entnehmen.

In FIG. 5 sind der Spulenstrom $I_{sp}$ als Kurve 50 und die zugehörigen Induktionsspannungen bei verschiedenen Fehlerströmen als Kurven 51 bis 53 dargestellt. Mit $U_{ind}$ ist die an den Ringbandkernen 10, 10' in einer I-windigen Meßwicklung gemessene Spannung bezeichnet, die aus der in den Ringbandkernen 10, 10' durch das Spulenfeld der flachen Ringspule 20 (n = 100, Spulenstrom $\hat{i}_H$ = 70 mA, Frequenz des Spulenstromes 15 kHz) erzeugten Wechselmagnetisierung in Bandlängsrichtung der Wandler und der überlagerten Magnetisierung des Fehlerstromes folgt. Es wurden beispielhaft Gleichfehlerströme von $i_F$ = +1 mA sowie $i_F$ = -1 mA gewählt und mit einem (Null)-Fehlerstrom $i_F$ = 0 verglichen.

Für $i_F$ = 0 erhält man eine zur Spannungsnullinie $U_{ind}$ = 0 symmetrische Spannungskurve 51. Die Spannungskurve 52 mit vergrößerter positiver und verkleinerter negativer Amplitude erhält man für einen Gleichfehlerstrom $i_F$ = +1 mA und die Spannungskurve 53 mit verkleinerter positiver und vergrößerter negativer Amplitude erhält man für einen Gleichfehlerstrom $i_F$ = -1 mA. In FIG. 5 sind die gemessenen Spannungskurven 51 bis 53 gleichzeitig dargestellt.

Bei netzfrequenten Fehlerströmen (Netzfrequenz 50 Hz bzw. 60 Hz) erhält man demgegenüber eine vom Augenblickswert des Fehlerstroms $i_F(t)$ bestimmte Amplitude des Spannungssignals $U_{ind}$. Beispielsweise erhält man zu einem Augenblickswert des Fehlerstromes $i_F(t)$ = +1 mA kurzzeitig das Spannungssignal $U_{ind}$, das für +1 mA Gleichfehlerstrom in FIG. 5 dargestellt ist.

Steigt der Fehlerstrom auf Werte von > 10 mA bis etwa 100 mA an, so verzerrt sich der zeitliche Verlauf der Wechselinduktion in Bandlängsrichtung immer stärker, bis die Induktion eine Schwingung mit der doppelten Frequenz des äußeren Wechselfeldes ausführt.

Letzterer Effekt der Frequenzverdopplung läßt sich so interpretieren, daß die von einem ausreichend großen Fehlerstrom in Bandlängsrichtung erzeugte Induktion

$$(5) \qquad B_F(t) = \mu 0.\mu r.i_F/l_e$$

durch das äußere magnetische Wechselfeld aus der Bandebene herausgedreht wird. In die Nulldurchgänge des äußeren Magnetfeldes fallen daher zeitlich die Induktions- "maxima" in fehlerstrombestimmter Bandlängsrichtung, während die Induktions-"minima" mit den Maxima des äußeren Magnetfeldes zeitlich zusammenfallen.

Bei weiterem Anstieg des Fehlerstromes sinkt die Wechselinduktion in Bandlängsrichtung immer weiter ab, bis die Amplitude der Wechselmagnetisierung nahezu Null erreicht. Grund für dieses Verhalten ist, daß der Wandler bei hohen Gleichfehlerströmen praktisch im Sättigungszustand verharrt und nur mehr sehr kleine Induktionsänderungen auftreten.

Die Fehlerstromerfassung kann bei dem anhand FIG. 1 dargestellten prinzipiellen Aufbau dadurch erfolgen, daß an einer Meßwicklung des Ringbandkernes 10 bzw. 10' die von der Wechselinduktion induzierte Spannung gemessen und in einer Auswerteschaltung verarbeitet wird. Beispielsweise kann eine Fehlerstromerfassung dadurch sichergestellt werden, daß die Meßspannung mit einer Referenzspannung verglichen wird, die vom Generator der Feldspule 20 abgeleitet sein kann und in ihrem zeitlichen Verlauf so abgestimmt ist, daß im fehlerstromfreien Fall Meß- und Referenzspannung nahezu übereinstimmen. Durch eine Auswerteschaltung erfolgt zu einer vorgegebenen Differenz zwischen der Meß- und der Referenzspannung die Auslösung.

In FIG. 4 ist eine Anordnung aus zwei Ringbandkernen 10 und 10' dargestellt, die beidseitig unmittelbar an eine Feldspule 20 anschließen und gemeinsam mit ihr auf einem Ferritrohr sitzen. Bei einer solchen Anordnung wurden die Ergebnisse gemessen, die in FIG. 5 wiedergegeben sind.

In den FIG. 6 und 7 sind ein oder zwei Ringbandkerne 10 bzw. 10' mit einer Feldspule 20 kombiniert und gemeinsam in einem Schalenkern 31 aus Ferrit eingebracht. Speziell in FIG. 6 sitzen zwei Ringbandkerne 10 und 10' beidseitig einer Feldspule 20 zwischen zwei Ferritzylindern 32 und 33. Das Ferritmaterial sorgt insbesondere für einen geringen magnetischen Widerstand des magnetischen Kreises des Spulenfeldes.

## Patentansprüche

1. Fehlerstromerfassungseinrichtung für Allstrom, bestehend aus einem Summenstromwandler (10) mit einer zugeordneten Feldspule (20), wobei die Feldspule (20) die Form einer flachen Ringspule hat, und wobei die Achsen (I,II) des Summenstromwandlers (10) und der Feldspule (20) in etwa kolinear verlaufen **dadurch gekennzeichnet,** daß der Summenstromwandler wenigstens einen Ringbandkern (10, 10') enthält, wobei die Symmetriezentren von Ringbandkern (10, 10') und Feldspule (20) auf den in etwa kolinearen Achsen (I,II) gegeneinander versetzt sind, und daß zumindest der Ringbandkern (10, 10') aus einem hochpermeablen Magnetwerkstoff mit flacher Magnetisierungskennlinie besteht, wodurch das Magnetfeld der Ringspule (20) eine in Bandlängsrichtung gerichtete Induktion im Ringbandkern (10, 10') aufbaut, ohne daß eine erregende magnetische Feldstärke in Bandlängsrichtung auftritt.

2. Fehlerstromerfassungseinrichtung nach Anspruch 1, **dadurch gekennzeichnet,** daß die Ringebenen (11,21) von Ringbandkern (10, 10') und Feldspule (20) in engem Kontakt miteinander stehen.

3. Fehlerstromerfassungseinrichtung nach Anspruch 1, **dadurch gekennzeichnet,** daß der Magnetwerkstoff eine Nickel(Ni)-Legierung ist.

4. Fehlerstromerfassungseinrichtung nach Anspruch 1, **dadurch gekennzeichnet,** daß der Magnetwerkstoff eine nanokristalline Eisen(Fe)-Basis-Legierung mit geringer Magnetostriktion und hoher Permeabilität ist.

5. Fehlerstromerfassungseinrichtung nach Anspruch 1, **dadurch gekennzeichnet,** daß der Magnetwerkstoff aus einem amorphen Metall besteht.

6. Fehlerstromerfassungseinrichtung nach Anspruch 5, **dadurch gekennzeichnet,** daß der amorphe Magnetwerkstoff eine Kobalt(Co)-Basislegierung mit geringer Magnetostriktion und hoher Permeabilität ist.

7. Fehlerstromerfassungseinrichtung nach Anspruch 1, **dadurch gekennzeichnet,** daß der Ringbandkern (10, 10') aus einem bandartigen Material (15) mit Vorzugsmagnetisierung, bei dem Magnetisierungsvektoren in der Bandebene senkrecht zur Bandlängsrichtung abwechselnd entgegengesetzt zueinander verlaufen und durch entsprechende Randmagnetisierungsvektoren geschlossene magnetische Kreise bilden, gewickelt ist.

8. Fehlerstromerfassungseinrichtung nach Anspruch 1, **dadurch gekennzeichnet,** daß der Magnetwerkstoff für den Ringbandkern (10, 10') nur eine geringe remanente Induktion in Bandlängsrichtung (16) aufweist.

9. Fehlerstromerfassungseinrichtung nach Anspruch 8, **dadurch gekennzeichnet,** daß beim Magnetwerkstoff für die remanente Induktion ($B_r$) und die Sättigungsinduktion ($B_s$)

$$B_r/B_s < 0{,}2 \ ,$$

insbesondere

$$B_r/B_s < 0{,}1 \ ,$$

gilt.

10. Fehlerstromerfassungseinrichtung nach Anspruch 1, **dadurch gekennzeichnet,** daß Ringbandkern (10, 10') und Feldspule (20) zumindest teilweise in ferritischem Material (30) eingebettet sind.

11. Fehlerstromerfassungseinrichtung nach Anspruch 10, **dadurch gekennzeichnet,** daß das ferritische Material eine Schale (31) zur Aufnahme von Ringbandkern (10, 10') und Feldspule (20) bildet.

12. Fehlerstromerfassungseinrichtung nach Anspruch 11, **dadurch gekennzeichnet,** daß Ringbandkern (10, 10') und Feldspule (20) zwischen zwei Ferritzylindern (32, 33) angeordnet sind.

13. Fehlerstromerfassungseinrichtung nach Anspruch 1, **dadurch gekennzeichnet,** daß eine Feldspule (20) zwischen zwei Ringbandkernen (10, 10') angeordnet ist.

## Claims

1. Fault-current detection device for universal current, comprising a summation current transformer (10) having an associated field coil (20), with the field coil (20) having the form of a flat ring coil and with the axes (I, II) of the summation current transformer (10) and the field coil (20) extending in a substantially collinear manner, characterised in that the summation current transformer contains at least one toroidal tape core (10, 10'), with the centres of symmetry of the toroidal tape core (10, 10') and the field coil (20) being staggered in relation to each other along the substantially collinear axes (I, II), and in that at least the toroidal tape core (10, 10') is made of a highly permeable magnetic material with a flat magnetization characteristic, whereby the magnetic field of the ring coil (20) sets up induction in the toroidal tape core (10, 10') that is directed in the longitudinal direction of the tape without any exciting magnetic field intensity occurring in the longitudinal direction of the tape.

2. Fault-current detection device according to claim 1, characterised in that the ring planes (11, 21) of the toroidal tape core (10, 10') and the field coil (20) are in close contact with each other.

3. Fault-current detection device according to claim 1, characterised in that the magnetic material is a nickel(Ni)-alloy.

4. Fault-current detection device according to claim 1, characterised in that the magnetic material is a nanocrystalline iron(Fe)-base alloy with low magnetostriction and high permeability.

5. Fault-current detection device according to claim 1, characterised in that the magnetic material consists of an amorphous metal.

6. Fault-current detection device according to claim 5, characterised in that the amorphous magnetic material is a cobalt(Co)-base alloy with low magnetostriction and high permeability.

7. Fault-current detection device according to claim 1, characterised in that the toroidal tape core (10, 10') is wound out of a tape-like material (15) with preferred magnetization, in which case magnetization vectors in the tape plane extend alternately in opposition to each other so as to be perpendicular to the longitudinal direction of the tape and form magnetic circuits which are closed by appropriate boundary magnetization vectors.

8. Fault-current detection device according to claim 1, characterised in that the magnetic material for the toroidal tape core (10, 10') has only low remanent induction in the longitudinal direction (16) of the tape.

9. Fault-current detection device according to claim 8, characterised in that, in the case of the magnetic material, for the remanent induction ($B_r$) and the saturation induction ($B_s$)

$$B_r/B_s < 0.2,$$

in particular

$$B_r/B_s < 0.1,$$

holds good.

10. Fault-current detection device according to claim 1, characterised in that the toroidal tape core (10, 10') and the field coil (20) are embedded at least in part in ferritic material (30).

11. Fault-current detection device according to claim 10, characterised in that the ferritic material forms a shell (31) to accommodate the toroidal tape core (10, 10') and the field coil (20).

12. Fault-current detection device according to claim 11, characterised in that the toroidal tape core (10, 10') and the field coil (20) are arranged between two ferrite cylinders (32, 33).

13. Fault-current detection device according to claim 1, characterised in that a field coil (20) is arranged between two toroidal tape cores (10, 10').


**Revendications**

1. Dispositif de détection de courant de défaut touscourants, constitué d'un transformateur (10) de courant totalisateur, auquel est associé une bobine (20) excitatrice, la bobine (20) excitatrice ayant la forme d'une bobine toroïdale plate et les axes (I, II) du transformateur (10) de courant totalisateur et de la bobine (20) excitatrice s'étendant à peu près colinéairement, caractérisé en ce que le transformateur de courant totalisateur comprend au moins un tore enroulé (10, 10'), les centres de symétrie du tore enroulé (10, 10') et de la bobine excitatrice (20) étant décalés l'un par rapport à l'autre sur les axes (I, II) à peu près colinéaires et au moins le tore enroulé (10, 10') étant en un matériau magnétique de grande perméabilité et de caractéristique de magnétisation plate, ce qui fait que le champ magnétique de la bobine toroïdale (20) établit une induction dirigée suivant la direction longitudinale de la bande dans le tore enroulé (10, 10'), sans qu'une intensité de champ magnétique excitatrice apparaisse dans la direction longitudinale de la bande.

2. Dispositif de détection de courant de défaut suivant la revendication 1, caractérisé en ce que les plans (11, 21) du tore enroulé (10, 10') et de la bobine excitatrice (20) sont en contact étroit l'un avec l'autre.

3. Dispositif de détection de courant de défaut suivant la revendication 1,

caractérisé en ce que le matériau magnétique est un alliage de nickel (Ni).

**4.** Dispositif de détection de courant de défaut suivant la revendication 1,

caractérisé en ce que le matériau magnétique est un alliage nanocristallin à base de fer (Fe) de faible magnétostriction et de grande perméabilité.

**5.** Dispositif de détection de courant de défaut suivant la revendication 1,

caractérisé en ce que le matériau magnétique est en un métal amorphe.

**6.** Dispositif de détection de courant de défaut suivant la revendication 5,

caractérisé en ce que le matériau magnétique amorphe est un alliage à base de cobalt (Co) de faible magnétostriction et de grande perméabilité.

**7.** Dispositif de détection de courant de défaut suivant la revendication 1,

caractérisé en ce que le tore enroulé (10, 10') est enroulé à partir d'un matériau (15) en forme de bande ayant une magnétisation préférentielle, dans lequel les vecteurs de magnétisation s'étendent dans le plan de la bande perpendiculairement à la direction longitudinale de la bande en alternant et en étant opposés l'un à l'autre et forment, par des vecteurs appropriés de magnétisation de bord, des circuits magnétiques fermés.

**8.** Dispositif de détection de courant de défaut suivant la revendication 1,

caractérisé en ce que le matériau magnétique pour le tore enroulé (10, 10') n'a qu'une induction rémanente faible dans la direction (16) longitudinale de la bande.

**9.** Dispositif de détection de courant de défaut suivant la revendication 8,

caractérisé en ce que l'on a dans le matériau magnétique, pour l'induction rémanente ($B_r$) et l'induction ($B_s$) de saturation,

$$B_r/B_s < 0{,}2,$$

notamment

$$B_r/B_s < 0{,}1.$$

**10.** Dispositif de détection de courant de défaut suivant la revendication 1,

caractérisé en ce que le tore enroulé (10, 10') et la bobine (20) excitatrice sont noyés au moins en partie dans un matériau ferritique (30).

**11.** Dispositif de détection de courant de défaut suivant la revendication 10,

caractérisé en ce que le matériau ferritique forme une coquille (31) pour la réception du tore enroulé (10, 10') et de la bobine excitatrice (20).

**12.** Dispositif de détection de courant de défaut suivant la revendication 11,

caractérisé en ce que le tore enroulé (10, 10') et la bobine excitatrice (20) sont montés entre deux cylindres (32, 33) de ferrite.

**13.** Dispositif de détection de courant de défaut suivant la revendication 1,

caractérisé en ce qu'une bobine excitatrice (20) est montée entre deux tores enroulés (10, 10').

FIG 2

FIG 1

FIG 3

FIG 6

FIG 7

20

10

10'

30

## FIG 4

$U_{ind}$

52

51

53

t

$i_{Sp}$

50

t

## FIG 5